# EUROPÄISCHE PATENTSCHRIFT

(11) **EP 0 997 658 B1**
(45) Veröffentlichungstag und Bekanntmachung des Hinweises auf die Patenterteilung: **04.08.2004**
(21) Anmeldenummer: 99117864.1
(22) Anmeldetag: 10.09.1999
(51) Int. Cl.: F16D 3/38

(54) **Kreuzgelenk**
Universal joint
Joint universel

(30) Priorität: 28.10.1998 DE 19849457
(43) Veröffentlichungstag der Anmeldung: 03.05.2000
(73) Patentinhaber: Spicer Gelenkwellenbau GmbH & Co. KG, 45143 Essen (DE)
(72) Erfinder: Sedlmeier, Ralf, Dipl.-Ing., 47475 Kamp-Lintfort (DE); Herlan, Thomas, Dr. Ing., 58332 Schwelm (DE)
(74) Vertreter: Harwardt, Günther, Dipl.-Ing.

(56) Entgegenhaltungen:
- EP-A- 0 875 688
- DE-A- 19 617 402
- DE-A- 19 751 640
- GB-A- 2 145 947
- US-A- 5 135 587

## Beschreibung

Die Erfindung betrifft ein Kreuzgelenk mit einer ersten Gelenkgabel, die einen ersten Basisabschnitt und davon abstehend zwei erste Gabelarme, die je eine erste Lagerbohrung besitzen, welche auf einer gemeinsamen ersten Bohrungsachse angeordnet sind, sowie eine erste Längsachse, die die erste Bohrungsachse rechtwinklig kreuzt, aufweist, mit einer zweiten Gelenkgabel aus Stahl, die einen zweiten Basisabschnitt und davon abstehend zwei zweite Gabelarme, die je eine zweite Lagerbohrung besitzen, welche auf einer gemeinsamen zweiten Bohrungsachse angeordnet sind, sowie eine zweite Längsachse, die die zweite Bohrungsachse rechtwinklig kreuzt, aufweist, wobei die beiden zweiten Gabelarme im Bereich ihrer jeweiligen zweiten Lagerbohrung getrennt sind, so daß jeweils dem zweiten Basisabschnitt verbundene Gabelarmabschnitte und jeweils ein separater Brückenabschnitt gebildet sind, wobei ferner die Brückenabschnitte und die Gabelarmabschnitte im Bereich der Trennfugen aneinanderliegend durch diese passierende Schrauben verbunden sind, und mit einem Zapfenkreuz mit vier Zapfen, von denen zwei unter Zwischenschaltung von Wälzkörpern und Lagerbüchsen in den ersten Lagerbohrungen und die beiden anderen unter Zwischenschaltung von Wälzkörpern und Lagerbüchsen in den beiden zweiten Lagerbohrungen aufgenommen sind.

Eine solche Gelenkwelle ist in der nachveröffentlichten EP 0875688 B1 mit den benannten Vertragsstaaten DE, FR, EP, NL, SE bekannt. Darüber hinaus ist dieser Druckschrift als bekannt zu entnehmen, daß die zweiten Gabelarme durch Bruchtrennen in mit dem zweiten Basisabschnitt verbundene Gabelarmabschnitte und jeweils einen davon separaten Brückenabschnitt getrennt sind und mit der Bruchflächen aneinanderliegend durch die Schrauben verbunden sind. Dabei ist die getriebeseitige Gelenkgabel aus einem solchen Material und mit solchen Formgebung hergestellt, daß im Bereich der Lagerbohrungen ein Bruchtrennen erfolgt, so daß sich ein Bock und ein Lagerdeckel ergibt, die mit ihren beiderseitigen Bruchflächenstrukturen formschlüssig mittels Schrauben verbunden werden können.

Kreuzgelenke sind häufig Bestandteil von Gelenkwellen, welche zwei solcher Kreuzgelenke umfassen, die durch eine Verbindungswelle miteinander verbunden sind. An den Enden sind Anschlussmittel vorgesehen, die mit einem treibenden beziehungsweise anzutreibenden Bauteil verbunden werden können. Solche Gelenkwellen finden Einsatz im Fahrzeugbau, d.h. im Antriebsstrang eines Kraftfahrzeuges, beispielsweise eines Nutzkraftwagens, oder auch im Maschinenbau. Beim Einsatz in einem Kraftfahrzeug sind zum Anschluß Flanschverbindungen vorgesehen, wobei beispielsweise ein erster Flansch, an den eines der Kreuzgelenke mit einem entsprechenden Flansch anzuschließen ist, auf einem Getriebeausgangszapfen befestigt ist, während der zweite beispielsweise auf einem Getriebeeingangszapfen eines weiteren Getriebes, beispielsweise des Achsgetriebes, angeordnet ist. Die Gelenkwelle oder ein aus mehreren solcher Gelenkwellen zusammengesetzter Strang dient zur Übertragung des Drehmomentes ausgehend vom Antriebsaggregat über das Schaltgetriebe auf das Achsgetriebe. Da die Einbauverhältnisse eng sind und die Flanschverbindung ungünstig zu handhaben ist, ist eine solche Verbindung aufwendig. Darüber hinaus erfordern die Flansche eine erhebliche Bearbeitung, da sie aufgrund der zu übertragenden hohen Momente mit verzahnten Flanschflächen versehen sind, die ineinander greifen. Bei schweren Gelenkwellen ist aus Montagegründen ein Einfädeln des Kreuzes aufgrund der Durchmesserverhältnisse in eine Gelenkgabel mit geschlossenen Lagerbohrungen nicht möglich. Darum werden bei solchen Kreuzgelenken die Gabelarme geteilt und die Brückenglieder, wie die entsprechenden Flächen der Gabelarme weisen beispielsweise Schwalbenschwanzführungen auf, um einen Formschluß zu erzielen. Die Bearbeitung solcher formschlüssiger Verbindungen ist aufwendig. Aus diesem Grunde sind solche Ausführungsformen auf Gelenkwellen für besonders hohe Drehmomente, wie sie beispielsweise in Walzwerken auftreten, beschränkt, weil die Kosten zu deren Herstellung hoch sind.

Die DE 196 54 233 A1 beschreibt eine Gabelausbildung für ein Kreuzgelenk mit einer Nabe, die zwei Arme mit Ausnehmungen aufweist, die zur Aufnahme zweier Lagerbüchsen eines Zapfenkreuzes dienen. Seitlich der Ausnehmungen sind ebene Flächen angeordnet, an denen sich jeweils ein Brückenglied mit Gegenflächen abstützt. Hierdurch wird eine zugehörige Lagerbüchse festgelegt. Die Brückenglieder werden durch Schrauben festgesetzt.

Aus der DE 44 42 062 A1 ist das Bruchtrennen eines Pleuels im Bereich der einen Durchbruch begrenzenden Querschnitte bekannt.

Der Erfindung liegt die Aufgabe zugrunde, ein Kreuzgelenk zu schaffen, dessen Montage, beziehungsweise dessen Montage in Verbindung mit einem Abschnitt einer Gelenkwelle mit geringem Aufwand durchführbar ist.

Gelöst wird diese Aufgabe durch ein Kreuzgelenk mit einer ersten Gelenkgabel, die einen ersten Basisabschnitt und davon abstehend zwei erste Gabelarme, die je eine erste Lagerbohrung besitzen, welche auf einer gemeinsamen ersten Bohrungsachse angeordnet sind, sowie eine erste Längsachse, die die erste Bohrungsachse rechtwinklig kreuzt, aufweist, mit einer zweiten Gelenkgabel aus Stahl, die einen zweiten Basisabschnitt und davon abstehend zwei zweite Gabelarme, die je eine zweite Lagerbohrung besitzen, welche auf einer gemeinsamen zweiten Bohrungsachse angeordnet sind, sowie eine zweite Längsachse, die die zweite Bohrungsachse rechtwinklig kreuzt, aufweist, wobei die beiden zweiten Gabelarme im Bereich ihrer jeweiligen zweiten Lagerbohrung getrennt sind, so daß jeweils dem zweiten Basisabschnitt verbundene Gabelarmabschnitte und jeweils ein separater Brückenabschnitt gebildet sind, wobei ferner die Brückenabschnitte und die Gabelarmabschnitte im Bereich der Trennfugen aneinanderliegend durch diese passierende Schrauben verbunden sind, und mit einem Zapfenkreuz mit vier Zapfen, von denen zwei unter Zwischenschaltung von Wälzkörpern und Lagerbüchsen in den ersten Lagerbohrungen und die beiden anderen unter Zwischenschaltung von Wälzkörpern und Lagerbüchsen in den beiden zweiten Lagerbohrungen aufgenommen sind,
wobei die zweiten Gabelarme durch Bruchtrennen in mit dem zweiten Basisabschnitt verbundene Gabelarmabschnitte und jeweils einen davon separaten Brückenabschnitt getrennt sind und mit den Bruchflächen aneinanderliegend durch die Schrauben verbunden sind und
wobei die zweiten Gabelarme über die Länge der zweiten Lagerbohrungen jeweils zwei diametral angeordnete linienförmige Bereiche aufweisen, die derart wärmebehandelt sind, daß bei der nachfolgenden Bruchtrennung in diesen Bereichen eine einem Sprödbruch entsprechende Oberflächenstruktur der Bruchflächen entsteht.

Gelöst wird diese Aufgabe auch durch ein Kreuzgelenk mit einer ersten Gelenkgabel, die einen ersten Basisabschnitt und davon abstehend zwei erste Gabelarme, die je eine erste Lagerbohrung besitzen, weiche auf einer gemeinsamen ersten Bohrungsachse angeordnet sind, sowie eine erste Längsachse, die die erste Bohrungsachse rechtwinklig kreuzt, aufweist,
mit einer zweiten Gelenkgabel aus Stahl, die einen zweiten Basisabschnitt und davon abstehend zwei zweite Gabelarme, die je eine zweite Lagerbohrung besitzen, welche auf einer gemeinsamen zweiten Bohrungsachse angeordnet sind, sowie eine zweite Längsachse, die die zweite Bohrungsachse rechtwinklig kreuzt, aufweist, wobei die beiden zweiten Gabelarme im Bereich ihrer jeweiligen zweiten Lagerbohrung getrennt sind, so daß jeweils dem zweiten Basisabschnitt verbundene Gabelarmabschnitte und jeweils ein separater Brückenabschnitt gebildet sind, wobei ferner die Brückenabschnitte und die Gabelarmabschnitte im Bereich der Trennfugen aneinanderliegend durch diese passierende Schrauben verbunden sind, und
mit einem Zapfenkreuz mit vier Zapfen, von denen zwei unter Zwischenschaltung von Wälzkörpern und Lagerbüchsen in den ersten Lagerbohrungen und die beiden anderen unter Zwischenschaltung von Wälzkörpern und Lagerbüchsen in den beiden zweiten Lagerbohrungen aufgenommen sind,
wobei die zweiten Gabelarme durch Bruchtrennen in mit dem zweiten Basisabschnitt verbundene Gabelarmabschnitte und jeweils einen davon separaten Brückenabschnitt getrennt sind und mit den Bruchflächen aneinanderliegend durch die Schrauben verbunden sind und
wobei die zweiten Gabelarme über die Länge der zweiten Lagerbohrungen jeweils zwei diametral angeordnete linienförmige Bereiche aufweisen, die mit einer derartigen Trenngeschwindigkeit getrennt sind, daß in diesen Bereichen eine einem Sprödbruch entsprechende Oberflächenstruktur der Bruchflächen entsteht.

Von Vorteil bei dieser Ausbildung ist, daß über die Bruchflächen eine innige Verbindung zwischen den Brückenabschnitten und den Gabelarmabschnitten erzielt wird, die eine Zuordnung der Bauteile nur in einer bestimmten Stellung zulassen, da individuelle Bruchflächen erzielt werden. Die Bruchflächen sorgen für eine Verzahnung, so daß eine innige Verbindung in der Drehmomentübertragungsrichtung um die Längsachse erzielt wird, und eine geringe Anzahl von Schrauben, vorzugsweise eine je Bruchflächenpaar, ausreichend ist. Durch die Wärmebehandlung wird konzentriert im Bereich der Lagerbohrungen eine Versprödung des Werkstoffes erzielt, welche sich nur über eine geringe Tiefe zu erstrecken braucht, um eine günstige Trennung, ähnlich einem Sprödbruch, zu erzielen. Alternativ ist es möglich durch die Schnelligkeit der Trennung die Bruchflächengestaltung zu beeinflußen. Wärmebehandlung und Trenngeschwindigkeit sind so aufeinander abgestimmt, daß eine Oberflächenstruktur im Bereich der Bruchflächen entsteht, die einer solchen, die üblicherweise bei einem Sprödbruch entsteht, entspricht. Vorzugsweise werden Stähle gewählt, die ein solches Verhalten begünstigen. Beispielsweise kommen hierzu Stähle mit einem Kohlenstoffgehalt gleich/ größer 0,38 %, vorzugsweise aber jedoch solche mit einem hohen Kohlenstoffgehalt von 0,7 % bis 0,8 %, wozu noch Legierungsbestandteile in geringem Maße hinzukommen, in Frage. Günstig ist zum Beispiel, wenn ein Stahl verwendet wird, der Schwefel mit einem Anteil von 0,01 % bis 0,06 % und ggf. Mangan mit einem Anteil von 0,60 % bis 1,46 % enthält.

Bei der Herstellung ist es möglich, die beiden zweiten Lagerbohrungen der Gelenkgabel vor dem Trennen auf ihren Endbearbeitungszustand zu bearbeiten. Zur Trennung ist vorgesehen, die zweiten Gelenkgabeln ausgehend von den beiden zweiten Lagerbohrungen einer Krafteinwirkung zur Trennung zu unterwerfen. Dabei konzentriert sich die Krafteinwirkung vorzugsweise auf die jeweils diametralen und linienförmigen Bereiche der zweiten Lagerbohrungen. Zur Wärmebehandlung kommt beispielsweise eine Behandlung mittels Laserstrahl in Frage. Als Stähle, die vorzugsweise den Anforderungen genügen, kommen Stähle mit der Qualität 38MnSiVS5, 80MnS, C70S6BY, C45MnSBY und C50MnSBY in Frage. Bei der konzentrierten Wärmebehandlung tritt in dem behandelten Bereich eine Martensitbildung auf, die ein Sprödbruchverhalten begünstigt. Bei der Trennung ist darauf zu achten, daß diese mit einer Geschwindigkeit erfolgt, daß bei den Bereichen, die keiner Wärmebehandlung unterworfen sind, weil diese beispielsweise auf eine geringere Tiefe als die Materialstärke im Bereich der Lagerbohrungen beschränkt ist, und für die Drehmomentübertragung eine gewisse Zähigkeit des Materials gefordert ist, so schnell erfolgt, daß keine Zeit zur Ausbildung fließender Abschnitte, d.h. plastisch verformter Abschnitte gegeben ist.

In Ausgestaltung der Erfindung ist ferner vorgesehen, daß die zweite Gelenkgabel für die Aufnahme der Schrauben im Bereich der Brückenabschnitte mit Durchgangsbohrungen und im Bereich der Gabelarmabschnitte mit Gewindebohrungen versehen ist, die zusammen vor dem Trennen angebracht worden sind, und daß sich die Schrauben beim Trennen mit den Gewindebohrungen im Eingriff befinden.

Ein bevorzugtes Ausführungsbeispiel der Erfindung ist in der Zeichnung schematisch dargestellt.

Es zeigt
- Figur 1: die Seitenansicht eines Kreuzgelenkes, teilweise geschnitten,

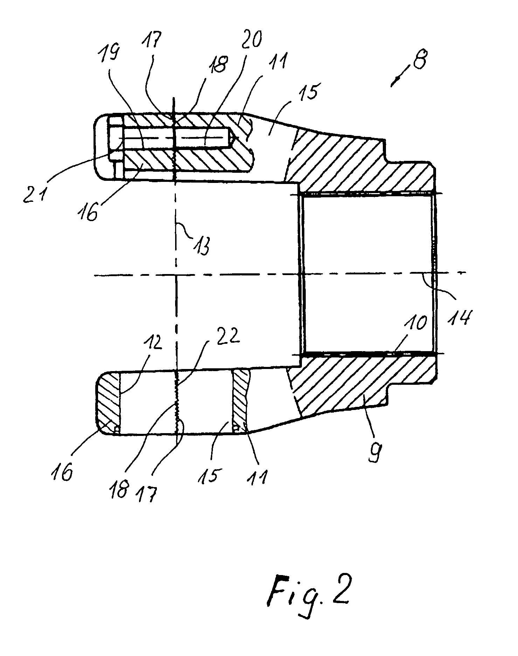

- Figur 2: die zweite Gelenkgabel als Einzelteil in einer Seitenansicht, teilweise in Ansicht und teilweise geschnitten.

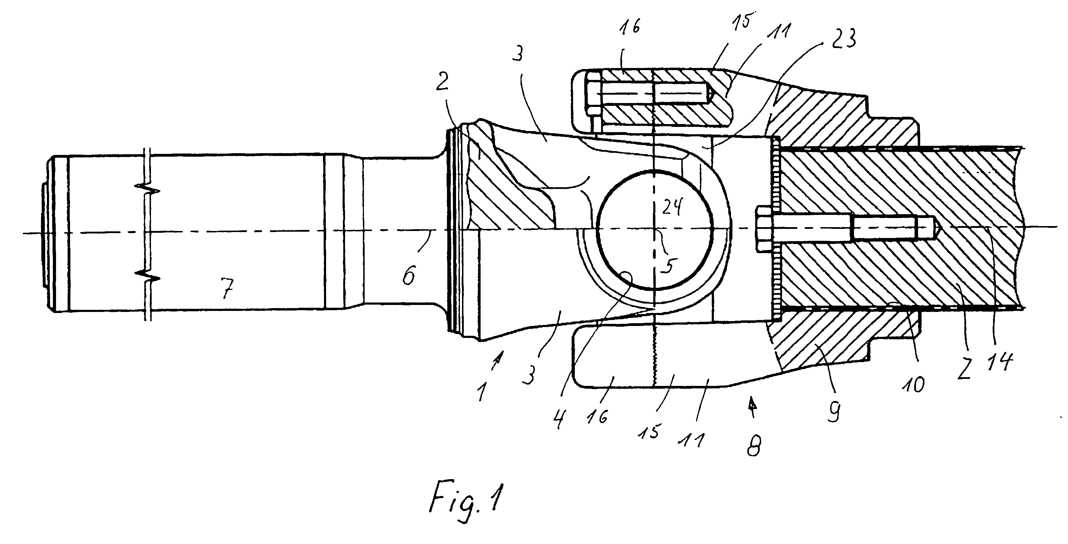

Bei der nachfolgenden Beschreibung wird auf die Figuren 1 und 3 zusammen Bezug genommen. Das Kreuzgelenk umfaßt eine erste Gelenkgabel 1, die einen ersten Basisabschnitt 2 besitzt, von dem zwei erste Gabelarme 3 axial vorstehen, die im radialen Abstand zur ersten Längsachse 6 angeordnet sind. Durch die beiden ersten Gabelarme 3 verlaufen erste Lagerbohrungen 4. Diese sitzen auf einer gemeinsamen Bohrungsachse 5, welche die erste Längsachse 6 rechtwinklig kreuzt. Die erste Längsachse 6 und die erste Bohrungsachse 5 liegen in einer Ebene. An den ersten Basisabschnitt 2 ist ein Zapfen 7, der beispielsweise zu einer Verbindungswelle gehört, angeschlossen. An deren anderem Ende kann ein weitere Gelenkgabel eines weiteren Kreuzgelenkes angeschlossen sein.

Das Kreuzgelenk 1 umfaßt ferner eine zweite Gelenkgabel 8, welche einen zweiten Basisabschnitt 9 aufweist, der eine zentrale Bohrung 10 besitzt, die beispielsweise verzahnt sein kann und mit einem Zapfen Z eines verzahnten Getriebeausgangs drehfest und axial unverschiebbar verbunden sein kann. Die Bohrung 10 ist auf der zweiten Längsachse 14 der zweiten Gelenkgabel 8 zentriert. Von dem nabenförmigen zweiten Basisabschnitt 9 stehen ebenfalls zwei zweite Gabelarme 11 axial in Richtung auf den ersten Basisabschnitt 2 der ersten Gelenkgabel 1 vor. In den beiden zweiten Gabelarmen 11 sind zweite Lagerbohrungen 12 angeordnet, die auf einer gemeinsamen zweiten Bohrungsachse 13 zentriert sind, welche mit der zweiten Längsachse 14 in einer Ebene liegt und diese rechtwinklig kreuzt.

Die zweite Gelenkgabel 8 ist im Bereich der zweiten Gabelarme 11, und zwar insbesondere im Bereich einer Ebene, die die zweite Bohrungsachse 13 enthält und auf welcher die zweite Längsachse 14 senkrecht steht, durch Bruchtrennen getrennt, so daß je zweitem Gabelarm 11 zwei Gabelarmabschnitte 15 mit dem zweiten Basisabschnitt 9 einstückig verbunden sind und ein davon getrennter Brückenabschnitt 16 je Gabelarm 11 entsteht. Es entstehen zwei Bruchflächen 17, 18, die von einer Bohrung zur Aufnahme jeweils einer Schraube 21 passiert werden. Dabei ist im Bereich der Bruchflächen 18 jedes Brückenabschnittes 16 eine Durchgangsbohrung 19 vorhanden und im Bereich der beiden Gabelarmabschnitte 15 mit den Bruchflächen 17 der beiden zweiten Gabelarme 11 sind Gewindebohrungen 20 eingebracht. Die Einbringung der hintereinanderliegenden beiden Bohrungen 18, 19 erfolgt vor dem Bruchtrennen. Für das Bruchtrennen werden Schrauben 21 lose eingeschraubt. Es erfolgt in einem Bereich ausgehend von der Wandung der Bohrungen der zweiten Lagebohrungen 12 eine Behandlung mit einem Laser entlang zweier diametral gegenüberliegender Linien, so daß ein linienförmiger Bereich 22 einer Wärmebehandlung unterzogen wird, die bei dem gewählten Werkstoff über eine bestimmte Tiefe zu einer Änderung der Gefügestruktur führt, die eine Bruchtrennung begünstigt. Die Bruchtrennung wird auch durch die bereits vorhandenen Bohrungen 19, 20 begünstigt, weil hierdurch die Querschnitte verringert werden. Nachfolgend erfolgt eine Beaufschlagung von innen, d.h. aus den zweiten Lagerbohrungen 12 heraus, und zwar konzentriert auf die beiden linienförmigen Bereiche 22, die an diametralen Stellen angeordnet sind, mit einer Geschwindigkeit, daß auch die nicht durch Laser wärmebehandelten Bereiche, in denen keine entsprechende Gefügeumwandlung zu Martensit erfolgte, auch eine Trennung in einer Weise erfolgt, daß ein Bruch mit einer Oberflächenstruktur entsteht, der einem Sprödbruch entspricht. Dies kann durch ein entsprechend schnelles Einwirken erfolgen, so daß den Teilchen im Bereich der Trennfuge zwischen den beiden Bruchflächen 17, 18 keine Zeit verbleibt, zu fließen, d.h. sich plastisch zu verformen.

Die erste Gelenkgabel 1 und die zweite Gelenkgabel 8 sind durch eine Zapfenkreuzgarnitur verbunden, welche ein Zapfenkreuz 23 mit vier in einer Ebene liegenden Zapfen und darauf jeweils unter Zwischenschaltung von Wälzkörpern gelagerte Lagerbüchsen umfaßt, von denen nur die Lagerbüchse 24 in Figur 1 sichtbar ist. Je zwei Zapfen haben eine gemeinsame, d.h. den beiden Bohrungsachsen 5, 13 entsprechende Achse. Die beiden ersten Lagerbüchsen 24 sind in den beiden ersten Gabelarmen 3 der ersten Gelenkgabel 1 aufgenommen, während die beiden zweiten Lagerbüchsen auf der zweiten Bohrungsachse 13 zentriert in den beiden zweiten Lagerbohrungen 12 der zweiten Gelenkgabel 8 aufgenommen sind. Die Montage kann so erfolgen, daß zunächst das Zapfenkreuz mit den beiden Lagerbüchsen 24 in der ersten Gelenkgabel 1 festgelegt wird und dieses durch erste Sicherungsringe gesichert wird. Vor der Montage in einem Fahrzeug kann die zweite Gelenkgabel 11 bereits auf dem Getriebezapfen Z festgelegt sein. Danach erfolgt die Montage der zweiten Lagerbüchsen bei entfernten Brückenabschnitten 16 an den zweiten Gabelarmen 11 der zweiten Gelenkgabel 8. Es ist nur ein geringer axialer Montageweg erforderlich, so daß eine Gelenkwelle, die zwei Kreuzgelenke umfaßt, leicht von unten in das Fahrzeug eingefädelt werden kann. Darüber hinaus ist die Gelenkwelle, die ein solches Kreuzgelenk umfaßt, leichter, da die dem Getriebezapfen Z zuzuordnende zweite Gelenkgabel vormontiert ist. Dies gilt auch beim Austausch.

Die zweiten Lagerbüchsen sind ebenfalls durch Sicherungsringe nach Befestigung der Brückenabschnitte 16 in den zweiten Gabelarmen 11 der zweiten Gelenkgabel 8 gesichert.

Die Trennung erfolgt durch Bruchtrennen. Dazu erfolgt zunächst eine von den zweiten Lagerbohrungen 12 ausgehende Wärmebehandlung durch einen Laser entlang linienförmiger Bereiche 22 und dann die Aufbringung einer Kraft, konzentriert auf diese Bereiche 22 von innen, so daß eine Bruchtrennung erfolgt. Diese führt aufgrund der Wärmebehandlung durch den Laser und aufgrund der gewählten Trenngeschwindigkeit sowie Werkstoffe zu Bruchflächen die einer Sprödbruchfläche entsprechen, so daß nach dem Trennen ein einfaches Zusammenfügen möglich ist, ohne daß eine Nachbearbeitung der Lagerbohrungen erfolgen muß.

### Bezugszeichenliste

- 1: erste Gelenkgabel
- 2: erster Basisabschnitt
- 3: erste Gabelarme
- 4: erste Lagerbohrung
- 5: erste Bohrungsachse
- 6: erste Längsachse
- 7: Zapfen
- 8: zweite Gelenkgabel
- 9: zweiter Basisabschnitt
- 10: Bohrung
- 11: zweite Gabelarme
- 12: zweite Lagerbohrung
- 13: zweite Bohrungsachse
- 14: zweite Längsachse
- 15: Gabelarmabschnitt
- 16: Brückenabschnitt
- 17, 18: Bruchfläche
- 19: Durchgangsbohrung
- 20: Gewindebohrung
- 21: Schraube
- 22: linienförmiger Bereich
- 23: Zapfenkreuz
- 24: Lagerbüchse
- Z: Getriebezapfen

## Patentansprüche

1. Kreuzgelenk mit einer ersten Gelenkgabel, die einen ersten Basisabschnitt (2) und davon abstehend zwei erste Gabelarme (3), die je eine erste Lagerbohrung (4) besitzen, welche auf einer gemeinsamen ersten Bohrungsachse (5) angeordnet sind, sowie eine erste Längsachse (6), die die erste Bohrungsachse (5) rechtwinklig kreuzt, aufweist,
mit einer zweiten Gelenkgabel (8) aus Stahl, die einen zweiten Basisabschnitt (9) und davon abstehend zwei zweite Gabelarme (11), die je eine zweite Lagerbohrung (12) besitzen, welche auf einer gemeinsamen zweiten Bohrungsachse (13) angeordnet sind, sowie eine zweite Längsachse (1), die die zweite Bohrungsachse (13) rechtwinklig kreuzt, aufweist, wobei die beiden zweiten Gabelarme (11) im Bereich ihrer jeweiligen zweiten Lagerbohrung (12) getrennt sind, so daß jeweils dem zweiten Basisabschnitt (9) verbundene Gabelarmabschnitte (15) und jeweils ein separater Brückenabschnitt (16) gebildet sind, wobei ferner die Brückenabschnitte (16) und die Gabelarmabschnitte (15) im Bereich der Trennfugen aneinanderliegend durch diese passierende Schrauben (2) verbunden sind, und
mit einem Zapfenkreuz (23) mit vier Zapfen, von denen zwei unter Zwischenschaltung von Wälzkörpern und Lagerbüchsen (24) in den ersten Lagerbohrungen (4) und die beiden anderen unter Zwischenschaltung von Wälzkörpern und Lagerbüchsen (25) in den beiden zweiten Lagerbohrungen (12) aufgenommen sind,
wobei die zweiten Gabelarme (11) durch Bruchtrennen in mit dem zweiten Basisabschnitt (9) verbundene Gabelarmabschnitte (15) und jeweils einen davon separaten Brückenabschnitt (16) getrennt sind und mit den Bruchflächen (17, 18) aneinanderliegend durch die Schrauben (21) verbunden sind und
wobei die zweiten Gabelarme (11) über die Länge der zweiten Lagerbohrungen (12) jeweils zwei diametral angeordnete linienförmige Bereiche (22) aufweisen, die derart wärmebehandelt sind, daß bei der nachfolgenden Bruchtrennung in diesen Bereichen (22) eine einem Sprödbruch entsprechende Oberflächenstruktur der Bruchflächen (17, 18) entsteht.

2. Kreuzgelenk mit einer ersten Gelenkgabel, die einen ersten Basisabschnitt (2) und davon abstehend zwei erste Gabelarme (3), die je eine erste Lagerbohrung (4) besitzen, welche auf einer gemeinsamen ersten Bohrungsachse (5) angeordnet sind, sowie eine erste Längsachse (6), die die erste Bohrungsachse (5) rechtwinklig kreuzt, aufweist,
mit einer zweiten Gelenkgabel (8) aus Stahl, die einen zweiten Basisabschnitt (9) und davon abstehend zwei zweite Gabelarme (11), die je eine zweite Lagerbohrung (12) besitzen, welche auf einer gemeinsamen zweiten Bohrungsachse (13) angeordnet sind, sowie eine zweite Längsachse (1), die die zweite Bohrungsachse (13) rechtwinklig kreuzt, aufweist, wobei die beiden zweiten Gabelarme (11) im Bereich ihrer jeweiligen zweiten Lagerbohrung (12) getrennt sind, so daß jeweils dem zweiten Basisabschnitt (9) verbundene Gabelarmabschnitte (15) und jeweils ein separater Brückenabschnitt (16) gebildet sind, wobei ferner die Brückenabschnitte (16) und die Gabelarmabschnitte (15) im Bereich der Trennfugen aneinanderliegend durch diese passierende Schrauben (2) verbunden sind, und
mit einem Zapfenkreuz (23) mit vier Zapfen, von denen zwei unter Zwischenschaltung von Wälzkörpern und Lagerbüchsen (24) in den ersten Lagerbohrungen (4) und die beiden anderen unter Zwischenschaltung von Wälzkörpern und Lagerbüchsen (25) in den beiden zweiten Lagerbohrungen (12) aufgenommen sind,
wobei die zweiten Gabelarme (11) durch Bruchtrennen in mit dem zweiten Basisabschnitt (9) verbundene Gabelarmabschnitte (15) und jeweils einen davon separaten Brückenabschnitt (16) getrennt sind und mit den Bruchflächen (17, 18) aneinanderliegend durch die Schrauben (21) verbunden sind und
wobei die zweiten Gabelarme (11) über die Länge der zweiten Lagerbohrungen (12) jeweils zwei diametral angeordnete linienförmige Bereiche (22) aufweisen,
die mit einer derartigen Trenngeschwindigkeit getrennt sind, daß in diesen Bereichen (22) eine einem Sprödbruch entsprechende Oberflächenstruktur der Bruchflächen (17, 18) entsteht.

3. Kreuzgelenk nach einem der Ansprüche 1 oder 2,
**dadurch gekennzeichnet,**
**daß** die zweite Gelenkgabel (8) für die Aufnahme der Schrauben (21) im Bereich der Brückenabschnitte (16) mit Durchgangsbohrungen (19) und im Bereich der Gabelarmabschnitte (15) mit Gewindebohrungen (20) versehen ist, die zusammen vor dem Trennen angebracht worden sind und daß sich die Schrauben (21) beim Trennen mit den Gewindebohrungen (20) im Eingriff befinden.

4. Kreuzgelenk nach einem der Ansprüche 1 oder 2,
**dadurch gekennzeichnet,**
**daß** die zweite Gelenkgabel (8) aus einem Stahl mit einem Kohlenstoffgehalt gleich/größer 0,38 %, insbesondere 0,7 % bis 0,8 % besteht.

5. Kreuzgelenk nach Anspruch 4,
**dadurch gekennzeichnet,**
**daß** der Stahl Schwefel mit einem Anteil von 0,01 % bis 0,06 % enthält.

6. Kreuzgelenk nach einem der Ansprüche 4 oder 5,
**dadurch gekennzeichnet,**
**daß** der Stahl Mangan mit einem Anteil von 0,60 % bis 1,46 % enthält.

7. Kreuzgelenk nach einem der Ansprüche 1 bis 6,
**dadurch gekennzeichnet,**
**daß** die beiden zweiten Lagerbohrungen (12) der zweiten Gelenkgabel (8) vor dem Trennen ihren Endbearbeitungszustand aufweisen.

8. Kreuzgelenk nach einem der Ansprüche 1 bis 7,
**dadurch gekennzeichnet,**
**daß** die zweite Gelenkgabel (8) ausgehend von den beiden zweiten Lagerbohrungen (12) einer Krafteinwirkung zur Trennung unterworfen worden ist.

9. Kreuzgelenk nach Anspruch 8,
**dadurch gekennzeichnet,**
**daß** die Krafteinwirkung auf die jeweils diametralen linienförmigen Bereiche (22) der zweiten Lagerbohrungen (12) konzentriert ist.

10. Kreuzgelenk nach Anspruch 1,
**dadurch gekennzeichnet,**
**daß** die Wärmebehandlung mittels Laserstrahl erfolgt.

## Claims

1. Universal joint having a first joint yoke
- having a first base portion (2) and two first yoke arms (3), projecting therefrom and having, respectively, a first bearing bore (4), arranged on a common first bore axis (5), as well as a first longitudinal axis (6), intersecting at a right angle the first bore axis (5),
- having a second joint yoke (8) made from steel, which has a second base portion (9) and two second yoke arms (11), projecting therefrom and have, respectively, a second bearing bore (12), arranged on a common second bore axis (13), as well as a second longitudinal axis (1), intersecting at a right angle the second bore axis (13), wherein the two second yoke arms (11) are separated in the region of their respective second bearing bores (12), so that, respectively, yoke arm portions (15) connected to the second base portion (9) and a separate bridge portion (16) are formed, wherein, further, the bridge portions (16) and the yoke arm portions (15) are connected in the region of the parting lines, abutting each other, by screws (2) passed therethrough, and
- having a journal cross (23) with four journals, of which two are received by means of interposition of rolling members and bearing bushings (24) in the first bearing bores (4) and the other two are received by means of interposition of rolling members and bearing bushings (25) in the two second bearing bores (12),
wherein the second yoke arms (11) are separated by means of fracture separation into yoke arm portions (15), connected to the second base portion (9) and, respectively, a bridge portion (16) separate therefrom and are connected with the fracture faces (17, 18) abutting each other, by the screws (21) and
wherein the second yoke arms (11) have over the length of the second bearing bores (12), respectively, two diametrically arranged linear regions (22), which are heat-treated in such a way, that in the following fracture separation in these portions (22) a surface structure of the fracture faces (17, 18) corresponding to a brittle fracture is produced.

2. Universal joint having a first joint yoke,
- having a first base portion (2) and two first yoke arms (3), projecting therefrom and having, respectively, a first bearing bore (4), arranged on a common first bore axis (5), as well as a first longitudinal axis (6), intersecting at a right angle the first bore axis (5),
- having a second joint yoke (8) made from steel, which has a second base portion (9) and two second yoke arms (11), projecting therefrom and have, respectively, a second bearing bore (12), arranged on a common second bore axis (13), as well as a second longitudinal axis (1), intersecting at a right angle the second bore axis (13), wherein the two second yoke arms (11) are separated in the region of their respective second bearing bores (12), so that, respectively, yoke arm portions (15) connected to the second base portion (9) and a separate bridge portion (16) are formed, wherein, further, the bridge portions (16) and the yoke arm portions (15) are connected in the region of the parting lines, abutting each other, by screws (2) passed therethrough, and
- having a journal cross (23) with four journals, of which two are received by means of interposition of rolling members and bearing bushings (24) in the first bearing bores (4) and the other two are received by means of interposition of rolling members and bearing bushings (25) in the two second bearing bores (12),
wherein the second yoke arms (11) are separated by means of fracture separation into yoke arm portions (15), connected to the second base portion (9) and, respectively, a bridge portion (16) separate therefrom and are connected with the fracture faces (17, 18) abutting each other, by the screws (21) and
wherein the second yoke arms (11) have over the length of the second bearing bores (12), respectively, two diametrically arranged linear regions (22) separated at such a separation speed, that in these portions (22) a surface structure of the fracture faces (17, 18) corresponding to a brittle fraction is produced.

3. Universal joint according to one of claims 1 or 2,
**characterised in that**
the second joint yoke (8) is provided in the region of the bridge portions (16) with through bores (19) for receiving the screws (21) and in the region of the yoke arm portions (15) with threaded bores (20), which were produced jointly prior to the separation and that the screws (21) are engaged with the threaded bores (20) during the separation.

4. Universal joint according to one of claims 1 or 2,
**characterised in that**
the second joint yoke (8) is made from a steel with a carbon content of equal to/ greater than 0.38%, especially 0.7% to 0.8%.

5. Universal joint according to claim 4,
**characterised in that**
the steel contains sulphur with a part of 0.01 % to 0.06 %

6. Universal joint according to one of claims 4 or 5,
**characterised in that**
the steel contains manganese with a part of 0.60 % to 1.46 %.

7. Universal joint according to one of claims 1 to 6,
**characterised in that**
the two second bearing bores (12) of the second joint yoke (8) have their finished condition prior to separation.

8. Universal joint according to one of claims 1 to 7,
**characterised in that**
starting from the two second bearing bores (12), the second joint yoke (8) is subjected to a force for the separation process.

9. Universal joint according to claim 8,
**characterised in that**
the force is concentrated on the, respectively, diametrical linear portions (22) of the second bearing bores (12).

10. Universal joint according to claim 1,
**characterised in that**
the heat-treatment is carried out by a laser beam.

## Revendications

1. Joint universel comportant une première fourche, qui possède un premier tronçon de base (2) et deux bras de fourche (3), qui s'étendent à partir de ce tronçon et possèdent chacun un premier alésage de palier (4), ces alésages de palier étant disposés sur un premier axe commun d'alésage (5), ainsi qu'un premier axe longitudinal (6), qui recoupe à angle droit le premier axe d'alésage (5), comportant une seconde fourche (8) en acier, qui possède un deuxième tronçon de base (9) et deux seconds bras de fourche (11), qui s'étendent à partir de ce tronçon et possèdent chacun un premier alésage de palier (12), ces alésages de paliers étant disposés sur un premier axe commun d'alésage (5), ainsi qu'un second axe longitudinal (6), qui recoupe à angle droit le second axe d'alésage (13), les deux seconds bras (11) de la fourche étant séparés dans la zone de leur second alésage de palier respectif (12) de telle sorte que des tronçons (15) des bras de la fourche, qui sont reliés respectivement au second tronçon de base (9), et respectivement un tronçon séparé en pont (16) sont formés, et en outre les tronçons en pont (16) et les tronçons (15) des bras de fourche étant reliés, en étant appliqués l'un contre l'autre dans la zone des joints de séparation, par des vis (2) qui traversent ces tronçons, et
comportant un ensemble cruciforme (23) de tourillons comprenant quatre tourillons, dont deux sont logés dans les premiers alésages de palier (4) moyennant l'interposition de corps de roulement et de coussinets de palier (24) et dont les deux autres sont logés dans les deux seconds alésages de palier (12) moyennant le montage intercalé de corps de roulement et de coussinets de palier (25),
dans lequel les seconds bras (11) de la fourche sont séparés par rupture en des tronçons (15) des bras de la fourche, qui sont reliés au second tronçon de base (9), et respectivement un tronçon de pont (16) qui en est séparé, et sont reliés aux surfaces de rupture (17, 18) en étant appliqués l'un contre l'autre, au moyen des vis (21), et
dans lequel les deux bras (11) de la fourche possèdent, sur la longueur des seconds alésages de palier (12), respectivement deux parties diamétrales de forme linéaire (22) qui sont soumis à un traitement thermique de telle sorte que lors de la rupture ultérieure dans ces zones (22), il apparaît une structure superficielle des surfaces de rupture (17, 18), qui correspond à une rupture par fragilisation.

2. Joint universel comportant une première fourche, qui possède un premier tronçon de base (2) et deux bras de fourche (3), qui s'étendent à partir de ce tronçon et possèdent chacun un premier alésage de palier (4), ces alésages de palier étant disposés sur un premier axe commun d'alésage (5), ainsi qu'un premier axe longitudinal (6), qui recoupe à angle droit le premier axe d'alésage (5), comportant une seconde fourche (8) en acier, qui possède un deuxième tronçon de base (9) et deux seconds bras de fourche (11), qui s'étendent à partir de ce tronçon et possèdent chacun un second alésage de palier (12), ces alésages de palier étant disposés sur un second axe commun d'alésage (13), ainsi qu'un second axe longitudinal (1), qui recoupe à angle droit le second axe d'alésage (13), les deux seconds bras (11) de la fourche étant séparés dans la zone de leur second alésage de palier respectif (12) de telle sorte que des tronçons (15) du bras de la fourche, qui sont reliés respectivement au second tronçon de base (9), et respectivement un tronçon séparé en pont (16) sont formés, et en outre les tronçons en pont (16) et les tronçons (15) des bras de fourche étant reliés, en étant appliqués l'un contre l'autre dans la zone des joints de séparation, par des vis (2) qui traversent ces tronçons, et comportant un ensemble cruciforme (23) de tourillons comprenant quatre tourillons, dont deux sont logés dans les premiers alésages de palier (4) moyennant l'interposition de corps de roulement et de coussinets de palier (24) et dont les deux autres sont logés dans les deux seconds alésages de palier (12) moyennant le montage intercalé de corps de roulement et de coussinets de palier (25),
dans lequel les deux bras (11) de la fourche sont séparés par rupture en des tronçons (15) des bras de la fourche, qui sont reliés au second tronçon de base (9), et respectivement un tronçon de pont (16) qui en est séparé, et sont reliés aux surfaces de rupture (17, 18) en étant appliqués l'un contre l'autre, au moyen des vis (21), et
dans lequel les seconds bras (11) de la fourche possèdent, sur la longueur des seconds alésages de palier (12), respectivement deux parties diamétrales de forme linéaire (22) qui sont séparés avec une vitesse de séparation telle que dans ces zones (22), il apparaît une structure superficielle des surfaces de rupture (17, 18), qui correspond à une rupture par fragilisation.

3. Joint universel selon l'une des revendications 1 ou 2, **caractérisé en ce**
**que** la seconde fourche (8) du joint comporte, pour le logement des vis (21), des perçages traversants (19) dans la zone des tronçons en pont (16) et comporte, dans la zone des tronçons (15) des bras de la fourche, des perçages taraudés (20), qui ont été formés par réunion avant la séparation et que lors de la séparation, les vis (21) engrènent avec les perçages taraudés (20).

4. Joint universel selon l'une des revendications 1 ou 2, **caractérisé en ce**
**que** la second fourche (8) du joint est réalisée en un acier ayant une teneur en carbone égale/supérieure à 0,38 % et notamment allant de 0,7 à 0,8 %.

5. Joint universel selon la revendication 4,
**caractérisé en ce**
**que** l'acier contient du soufre en un pourcentage allant de 0,01 % à 0,06 %.

6. Joint universel selon l'une des revendications 4 ou 5, **caractérisé en ce**
**que** l'acier contient du manganèse en un pourcentage allant de 0,60 % à 1,46 %.

7. Joint universel selon l'une des revendications 1 à 6, **caractérisé en ce**
**que** les deux seconds alésages de palier (12) de la seconde fourche (8) du joint possèdent, avant la séparation, leur état d'usinage final.

8. Joint universel selon l'une des revendications 1 à 7, **caractérisé en ce**
**que** la seconde fourche (8) du joint a été soumise à partir des deux seconds alésages de palier (12) à une action de force pour la séparation.

9. Joint universel selon la revendication 8, **caractérisé en ce**
**que** l'action de force est concentrée sur les parties respectivement diamétrales en forme de lignes (22) des seconds alésages de palier (12).

10. Joint universel selon la revendication 1, **caractérisé en ce**
**que** le traitement thermique est réalisé à l'aide d'un faisceau laser.
